Europäisches Patentamt

European Patent Office

Office européen des brevets

(19)

(11) Numéro de publication: **0 106 409**
**B1**

(12) # FASCICULE DE BREVET EUROPEEN

(45) Date de publication du fascicule du brevet:
**27.01.88**

(51) Int. Cl.⁴: **G 01 S 7/52,** G 01 S 7/62,
G 01 S 15/02

(21) Numéro de dépôt: **83201448.4**

(22) Date de dépôt: **10.10.83**

(54) Appareil d'exploration de milieux par échographie ultrasonore.

(30) Priorité: **13.10.82 FR 8217141**

(43) Date de publication de la demande:
**25.04.84 Bulletin 84/17**

(45) Mention de la délivrance du brevet:
**27.01.88 Bulletin 88/4**

(84) Etats contractants désignés:
**BE DE FR GB SE**

(56) Documents cités:
**EP - A - 0 077 585**
**FR - A - 2 353 056**
**US - A - 4 016 750**
**US - A - 4 057 049**
**US - A - 4 145 741**

**IBM JOURNAL OF RESEARCH AND DEVELOPMENT,
vol. 25, no. 1, janvier 1981, pages 71-82, New York, US;
K.M.PAN et al.: "Tomographic reconstruction of
ultrasonic attenuation with correction for refractive
errors"**

(73) Titulaire: **Laboratoires d'Electronique et de Physique
Appliquée L.E.P., 3, Avenue Descartes,
F-94450 Limeil-Brévannes (FR)**

(84) Etats contractants désignés: **FR**

(73) Titulaire: **N.V. Philips' Gloeilampenfabrieken,
Groenewoudseweg 1, NL-5621 BA Eindhoven (NL)**

(84) Etats contractants désignés: **BE DE GB SE**

(72) Inventeur: **Hottier, François, Société Civile
S.P.I.D. 209 rue de l'Université, F-75007 Paris (FR)**

(74) Mandataire: **Landousy, Christian et al, Société Civile
S.P.I.D. 209, Rue de l'Université, F-75007 Paris (FR)**

## Description

La présente invention a trait à un appareil d'exploration de milieux et notamment de tissus biologiques par échographie ultrasonore, comportant au moins un transducteur ultrasonore associé à un étage d'émission pour assurer l'émission répétée de signaux ultrasonores, à un étage de réception pour assurer la réception des échos ultrasonores correspondant aux obstacles principaux rencontrés dans leur direction de propagation par les signaux émis, l'étage de réception comprenant un premier circuit de traitement des échos reçus comprenant lui-même un premier amplificateur relié à l'électrode de sortie du transducteur, un dispositif de compensation de gain et un dispositif de visualisation en fonction du temps des positions des échos le long de la direction d'exploration et de leurs amplitudes (voir par exemple le document US-A-4 016 750).

Dans la demande européenne EP-A-0 077 585 qui est considérée comme comprise dans l'état de la technique au sens de l'article 54 (3) CBE, il est proposé un appareil qui comprend, plus précisément, un dispositif de traitement des échos composé d'un premier et d'un deuxième circuit de traitement. Le premier circuit de traitement est de type classique et est composé essentiellement d'un premier amplificateur des signaux présents sur l'électrode de sortie du transducteur, d'un dispositif de compensation de gain et du dispositif de visualisation. Le deuxième circuit de traitement, qui lui est associé en parallèle, comprend, lui, (a) un deuxième amplificateur également relié à l'électrode de sortie du transducteur, (b) en sortie de ce deuxième amplificateur, un ensemble de n voies en parallèle les unes sur les autres et comprenant chacune successivement un filtre passe-bande (l'ensemble des filtres ainsi prévus étant tel que leurs bandes passantes respectives sont jointives de façon à couvrir approximativement la bande passante du deuxième amplificateur) et un détecteur d'enveloppe (composé lui-même d'un redresseur et d'un filtre passe-bas à constante de temps réglable), (c) en sortie des n voies, un circuit utilisant les signaux de sortie de celles-ci pour évaluer un paramètre qui est un indicateur de dispersion des amplitudes des signaux de fréquence centrale de chaque voie et qui, simultanément, est en corrélation locale directe avec la pente moyenne (appelée coefficient différentiel d'atténuation ultrasonore) de la courbe de variation de l'atténuation ultrasonore dans les tissus explorés en fonction de la fréquence, et (d) en sortie de ce circuit d'évaluation, un circuit de détermination de la valeur de ce coefficient à l'intérieur de chacune des zones délimitées dans les tissus explorés par les échos correspondant aux obstacles rencontrés, les signaux de sortie de ce circuit de détermination assurant la modulation de l'image présentée sur le dispositif de visualisation.

L'appareil répondant à cette structure est intéressant en ce qu'il permet l'obtention d'informations quantitatives, par évaluation locale d'un paramètre qui est en relation directe avec le coefficient différentiel d'atténuation ultrasonore, puis la visualisation directe des valeurs de ce coefficient en échographie de type A ou B. La réalisation d'un tel appareil est cependant assez encombrante, notamment en raison de la présence de la batterie de n filtres, et, si cette réalisation est partiellement remplacée par un logiciel informatique, les calculs à effectuer sont relativement longs.

Le but de l'invention est de proposer un appareil du type précisé en introduction, mais plus simple que la réalisation antérieure citée. A cet effet l'appareil conforme à l'invention est caractérisé en ce que l'étage de réception comprend, en parallèle sur ce premier circuit de traitement, un deuxième circuit de traitement composé en série d'un circuit de contrôle automatique de gain en fonction de la distance des échos, d'un circuit de correction des effets de diffraction, d'un circuit de transposition fréquentielle et de sélection d'une mince bande de fréquence centrée sur une fréquence $F_c$ et comprise dans la bande passante du transducteur, d'un amplificateur logarithmique, et d'un diviseur par $F_c$ dont la sortie est envoyée vers le dispositif de visualisation.

Cette structure d'appareil est remarquable en ce qu'on ne considère plus, dans les spectres de fréquence instantanés successifs du signal de sortie du transducteur, que de minces tranches de fréquence centrées sur la fréquence la plus appropriée pour l'analyse des milieux à examiner. Si l'on cherche alors à exprimer la valeur de l'énergie dans cette bande de fréquence, comme cette valeur I est proportionnelle à $E^{-\beta F_c d}$ ($\beta$ étant le coefficient différentiel d'atténuation ultrasonore, $F_c$ la fréquence centrale de la bande sélectionnée, et d la distance des tissus), les courbes $I_{dB} = f(d)$ sont, si $\beta$ et $F_c$ sont constants, des droites dont les pentes moyennes reflètent directement – si les unités sont correctement choisies – les valeurs d'atténuation ultrasonore.

Le brevet des Etats-Unis d'Amérique US-A-4 057 049 décrit également un échographe dont l'étage de réception comprend en parallèle plusieurs voies de traitement. Les moyens inclus dans cet étage et l'objectif recherché sont cependant extrêmement différents des moyens et buts de la présente invention. En effet, le document cité met en évidence que, dans les milieux explorés par échographie ultrasonore, une compensation croissante de l'atténuation à l'aide d'un coefficient de proportionnalité augmentant en fonction de la distance n'est pas suffisante compte tenu du très grand nombre de petites cibles qui occupent lesdits milieux. Pour corriger les images incorrectes ainsi obtenues, ledit document prévoit une compensation plus complexe faisant intervenir le comportement des cibles pour différentes valeurs de la fréquence d'émission et consistant à modifier progressivement ledit facteur de proportionnalité lorsque la distance d'examen augmente. Dans le cas de la présente invention, la structure proposée a pour objet non de compenser une atténuation se produisant de façon complexe dans les milieux explorés, mais d'obtenir, par évaluation locale d'un paramètre lié à cette atténuation, des informations quantitatives sur la nature desdits milieux, par exemple, dans le domaine médical, des renseignements sur l'état pathologique de ces milieux.

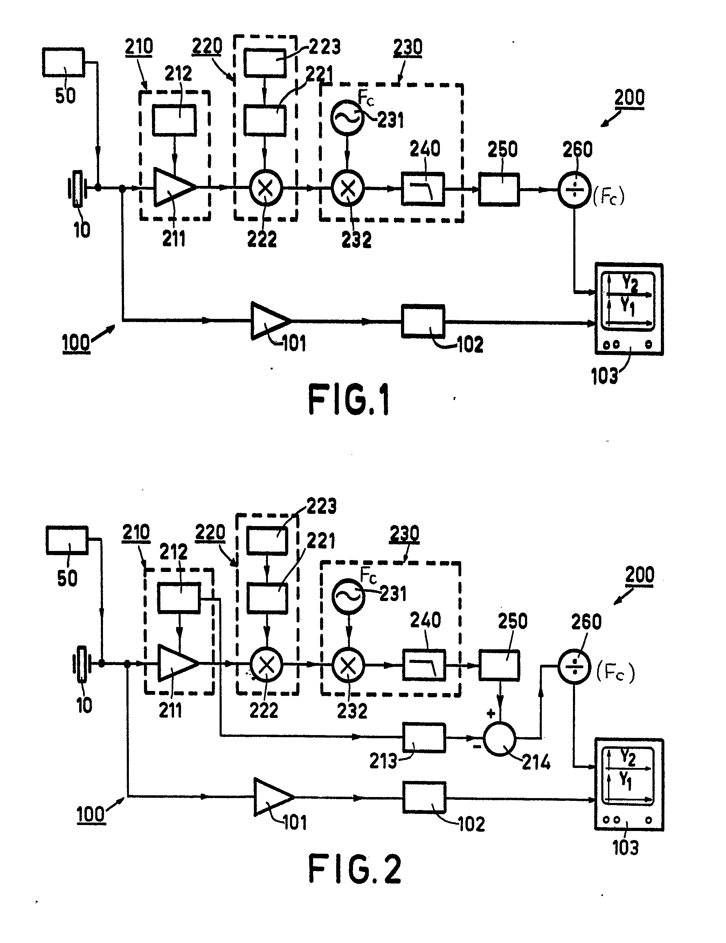

Les particularités et avantages de l'invention apparaîtront maintenant de façon plus précise dans la description qui suit et dans les dessins annexés, donnés à titre d'exemples non limitatifs et dans lesquels les figures 1 à 3 montrent trois exemples de réalisation de l'appareil d'exploration de milieux conforme à l'invention.

L'appareil décrit en référence aux figures est dans le cas présent équipé d'une sonde unique constituant le support d'un transducteur ultrasonore 10 et permettant d'obtenir des échographies de type A. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans les tissus à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel, également associée à un circuit de commutation du dispositif de traitement ainsi qu'à un réseau de lignes à retard ou de déphaseurs.

Le transducteur 10 est associé d'une part à un étage d'émission 50 destiné à permettre l'émission répétée de signaux ultrasonores par le transducteur dans une direction d'exploration quelconque à travers les tissus à examiner et d'autre part à un étage de réception destiné à assurer le traitement des échos ultrasonores reçus par le transducteur et correspondant aux obstacles principaux rencontrés dans leur direction de propagation par les signaux émis. Ces obstacles sont repérés sur les échogrammes par les échos de grande amplitude qui matérialisent les frontières entre tissus dont on cherche à déterminer les coefficients différentiels d'atténuation ultrasonore.

D'une façon tout à fait classique, l'étage de réception comprend un premier circuit de traitement 100 des échos ultrasonores reçus, composé d'un premier amplificateur 101 (qui est en fait un préamplificateur), d'un dispositif de compensation de gain 102 et d'un dispositif de visualisation 103. Le transducteur 10 est relié par son électrode de sortie à l'entrée de l'amplificateur 101, dont les signaux de sortie traversent le dispositif 102 assurant la compensation de l'amplitude des échos en fonction de la distance puis sont visualisés sur le dispositif 103, sous la forme d'une échographie de type A, sur un axe correspondant à la direction principale de propagation du transducteur 10.

Conformément à l'invention, l'étage de réception comprend également un deuxième circuit de traitement 200, placé en parallèle sur le premier et composé à son tour des éléments suivants (voir la figure 1):

(a) un circuit 210 de contrôle automatique de gain en fonction de la distance des échos, prévu à la suite de l'électrode de sortie du transducteur 10;

(b) un circuit 220 de correction des effets de diffraction;

(c) un circuit 230 de transposition fréquentielle et de sélection d'une bande de fréquence centrée sur la fréquence $F_c$ correspondant à la puissance maximale du spectre du transducteur, composé d'un oscillateur 231, d'un multiplieur 232, et d'un filtre passe-bas 240;

(d) un amplificateur logarithmique 250;

(e) un diviseur 260 par $F_c$.

Le fonctionnement de cet étage est le suivant: une fois les corrections d'une part de gain en fonction du temps et d'autre part de diffraction effectuées, la bande de fréquence du signal ainsi obtenu en sortie du circuit 220 est ramenée en bande de base par mélange de ce signal dans le multiplieur 232 avec la sortie de l'oscillateur 231 à fréquence $F_c$, puis filtrée dans le filtre passe-bas 240. L'intensité de l'énergie ultrasonore dans cette bande de fréquence étant proportionnelle, on l'a vu, à $e^{-\beta f_c d}$, il ne reste donc plus qu'à prévoir, en sortie du circuit 230, l'amplificateur logarithmique 250 et le diviseur 260 par $F_c$ pour disposer en sortie de ce diviseur d'un signal dont l'amplitude est en corrélation locale directe avec la pente moyenne $\beta$ de la courbe de variation de l'atténuation ultrasonore dans les tissus explorés en fonction de la fréquence (cette pente $\beta$ étant appelée coefficient différentiel d'atténuation ultrasonore). On notera que la fréquence $F_c$ est choisie soit égale à la fréquence du spectre du transducteur correspondant à la puissance maximale pouvant être délivrée par celui-ci, soit égale à une fréquence plus faible que celle correspondant à cette puissance maximale, afin de tenir compte du comportement des tissus examinés en filtre passe-bas.

Les signaux de sortie du dispositif de compensation de gain 102 et du diviseur 260 modulent alors l'image présentée sur le dispositif de visualisation 103, de la façon suivante dans l'exemple ici décrit: l'image comprend d'une part l'échogramme classique de type A fourni par le premier circuit de traitement et envoyé sur une première voie $Y_1$ du dispositif 103, d'autre part une courbe en paliers affichée sur une deuxième voie $Y_2$ et représentant les différentes valeurs du coefficient d'atténuation ultrasonore entre les frontières définies par l'échogramme de la voie $Y_1$ (ces frontières correspondent aux principaux obstacles rencontrés dans les tissus et sont donc matérialisées par les échos de grande amplitude de cet échogramme de la voie $Y_1$).

Le circuit 220 de correction des effets de diffraction est composé en général d'une mémoire 221 et d'un multiplieur 222. Cette mémoire, commandée par un circuit d'horloge 223, contient les signaux de correction nécessaires en fonction de la distance du transducteur, qui doivent être envoyés vers le multiplieur 222 et dont les valeurs ont été préalablement stockées à la suite d'une phase de calibration préliminaire. Pour cette phase de calibration, il suffit de prendre en compte, dans le cas d'un transducteur non focalisant, les réponses échographiques du transducteur choisi lorsque celui-ci est placé en face d'un réflecteur métallique situé successivement à toutes les distances du transducteur correspondant aux profondeurs usuelles d'examen échographiques, ou, dans le cas le plus fréquemment rencontré d'un transducteur focalisant, les réponses échographiques obtenues par utilisation de fantômes dont on connaît parfaitement les caractéristiques ultrasonores, les réponses ainsi obtenues permettant l'introduction des coefficients de correction dans la mémoire 221, ici de type PROM.

Un circuit classique de contrôle automatique de gain comprend un amplificateur à gain variable, 211, commandé par le circuit de commande de gain proprement dit 212. Pour la précision de la mesure d'énergie qui est effectuée conformément à l'invention, il est souhaitable d'immobiliser ce gain temporairement, le temps d'effectuer réellement la mesure, entre deux instants $t_1$ et $t_2$. Ce résultat est obtenu en prévoyant dans le circuit 210 de contrôle automatique de gain l'action d'une fenêtre temporelle, pendant laquelle se produit la suspension de la variation du gain de l'amplificateur.

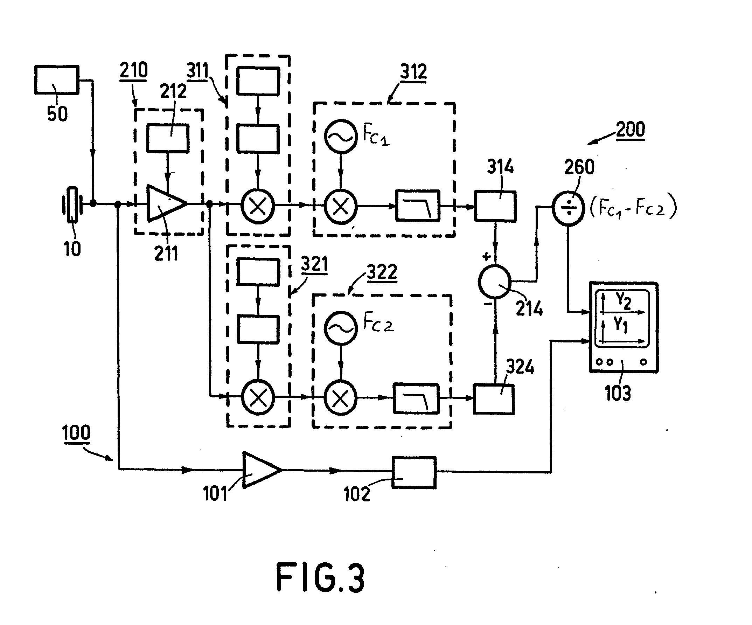

Pour neutraliser cette variation de gain, on peut également ne pas modifier le circuit 210, mais agir a posteriori soit en prévoyant (voir la figure 2) de soustraire du signal d'entrée du diviseur 260, dans le soustracteur 214, après traversée d'un deuxième amplificateur logarithmique 213, un signal proportionnel au signal de sortie du circuit de commande de gain 212, soit en utilisant deux fréquences distinctes $F_{c_1}$ et $F_{c_2}$ (voir la figure 3). Dans ce dernier cas, il faut alors prévoir en sortie du circuit 210 de contrôle automatique de gain deux voies identiques en parallèle comprenant chacune un circuit 311 ou 321 de correction des effets de diffraction (si nécessaire seulement), un circuit 312 ou 322 de sélection d'une bande de fréquence $F_{c_1}$ ou $F_{c_2}$ respectivement, et un amplificateur logarithmique 314 ou 324 dont les sorties sont respectivement reliées aux entrées du soustracteur 214. Le diviseur 260 est dans ce cas un diviseur par $F_{c_1} - F_{c_2}$.

Bien entendu, la présente invention n'est pas limitée aux exemples de réalisation qui viennent d'être décrits et représentés, à partir desquels d'autres variantes peuvent être proposées sans pour cela sortir du cadre de l'invention. En particulier, lorsque le transducteur 10 et son spectre sont connus à l'avance, le montage peut être simplifié en prévoyant à la place du circuit 230 un simple filtre passe-bande dont la bande passante est centrée sur $F_c$, choisie dans les mêmes conditions que précédemment. Cette solution est plus économique que les précédentes, mais chaque montage ne correspond qu'à un seul transducteur bien déterminé.

**Revendications**

1. Appareil d'exploration de milieux et notamment de tissus biologiques par échographie ultrasonore, comportant au moins un transducteur ultrasonore (10) associé à un étage d'émission (50) pour assurer l'émission répétée de signaux ultrasonores et à un étage de réception (100, 200) pour assurer la réception des échos ultrasonores correspondant aux obstacles principaux rencontrés dans leur direction de propagation par les signaux émis, l'étage de réception comprenant un premier circuit (100) de traitement des échos reçus comprenant lui-même un premier amplificateur (101) relié à l'électrode de sortie du transducteur, un dispositif de compensation de gain (102) et un dispositif (103) de visualisation en fonction du temps des positions des échos le long de la direction d'exploration et de leurs amplitudes, caractérisé en ce que l'étage de réception comprend, en parallèle sur ce premier circuit de traitement (100), un deuxième circuit de traitement (200) composé en série d'un circuit (210) de contrôle automatique de gain en fonction de la distance des échos, d'un circuit (220) de correction des effets de diffraction, d'un circuit (230) de transposition fréquentielle et de sélection d'une mince bande de fréquence centrée sur une fréquence $F_c$ et comprise dans la bande passante du transducteur (10), d'un amplificateur logarithmique (250), et d'un diviseur (260) par $F_c$ dont la sortie est envoyée vers le dispositif de visualisation (103) pour afficher les différentes valeurs du coefficient d'atténuation ultrasonore entre lesdits obstacles.

2. Appareil selon la revendication 1, caractérisé en ce que le circuit (230) de transposition fréquentielle et de sélection de bande de fréquence comprend un oscillateur (231) à la fréquence $F_c$ du spectre du transducteur correspondant à la puissance maximale pouvant être délivrée par celui-ci, un multiplieur (232) recevant sur ses entrées respectivement la sortie du circuit de correction des effets de diffraction et la sortie de l'oscillateur, et un filtre passe-bas (240) recevant la sortie du multiplieur et relié à l'entrée de l'amplificateur logarithmique.

3. Appareil selon la revendication 1, caractérisé en ce que le circuit (230) de transposition fréquentielle et de sélection de bande de fréquence comprend un oscillateur (231) à une fréquence $F_c$ du spectre du transducteur correspondant à une puissance inférieure à la puissance maximale pouvant être délivrée par celui-ci, un multiplieur (232), recevant sur ses entrées respectivement la sortie du circuit de correction des effets de diffraction et la sortie de l'oscillateur, et un filtre passe-bas (240) recevant la sortie du multiplieur et relié à l'entrée de l'amplificateur logarithmique.

4. Appareil selon la revendication 1, caractérisé en ce que le circuit (230) de transposition fréquentielle et de sélection de bande de fréquence comprend un filtre passe-bande de fréquence centrale

$F_c$ égale à la fréquence du spectre du transducteur (10) qui correspond à la puissance maximale pouvant être délivrée par celui-ci.

5. Appareil selon la revendication 1, caractérisé en ce que le circuit (230) de transposition fréquentielle et de sélection de bande de fréquence comprend un filtre passe-bande de fréquence centrale $F_c$ égale à une fréquence du spectre du transducteur (10) qui correspond à une puissance inférieure à la puissance maximale pouvant être délivrée par celui-ci.

6. Appareil selon l'une des revendications 2 à 5, caractérisé en ce que le circuit de contrôle automatique de gain (210) comprend des moyens pour générer une fenêtre temporelle pendant laquelle est suspendue la variation de gain.

7. Appareil selon l'une des revendications 2 à 5, caractérisé en ce que le circuit de contrôle automatique de gain (210) comprend un amplificateur à gain variable (211) commandé par un circuit de commande de gain (212), et en ce que l'appareil comprend, entre l'amplificateur logarithmique et le diviseur (260) par $F_c$, un soustracteur (214) recevant sur son entrée positive la sortie de l'amplificateur logarithmique et sur son entrée négative la sortie d'un deuxième amplificateur logarithmique dont l'entrée est reliée à la sortie du circuit de commande de gain (212).

8. Appareil selon l'une des revendications 2 à 5, caractérisé en ce qu'il comprend, en sortie du circuit de contrôle automatique de gain (210), deux voies identiques en parallèle comprenant chacune un circuit de correction des effets de diffraction (311) et (321), un circuit (312) et (322) de sélection d'une mince bande de fréquence centrée chacune sur une fréquence distincte $F_{c_1}$ et $F_{c_2}$ comprise dans la bande passante du transducteur (10), et un amplificateur logarithmique (314) et (324) dont les sorties sont reliées l'une à l'entrée positive d'un soustracteur (214) et l'autre à l'entrée négative de ce soustracteur, le diviseur (260) présent entre la sortie du soustracteur et l'entrée de la voie $Y_2$ du dispositif de visualisation étant un diviseur par $F_{c_1}-F_{c_2}$.

## Claims

1. A device for examining objects, notably biological tissues, by means of ultrasound echography, comprising at least one ultrasound transducer (10) which is connected to a transmitter stage (50) for the repeated transmission of ultrasound signals, and to a receiver stage (100, 200) for receiving the ultrasound echoes corresponding to the principal obstacles encountered by the transmitted signals in their direction of propagation, said receiver stage comprising a first circuit (100), for processing the echoes received which itself comprises a first amplifier (101) which is connected to the output electrode of the transducer, a gain compensation device (102), and a device (103) for displaying the positions of the echoes in the scanning direction as a function of time as well as the amplitudes thereof, characterized in that the receiver stage comprises a second processing circuit (200) which is connected parallel to the first processing circuit (100) and which consists of a series-connection of a circuit (210) for the automatic gain control as a function of the distance of the echoes, a circuit (220) for correcting diffraction effects, a circuit (230) for frequency transposition and for selecting a narrow frequency band which is centered around a frequency $F_c$ within the pass-band of the transducer (10), a logarithmic amplifier (250), and an $F_c$-divider (260) whose output signal is applied to the display device, (103) for displaying the different ultrasound attenuation coefficient values between said obstacles.

2. A device as claimed in Claim 1, characterized in that the circuit (230) for frequency transposition and for selecting the frequency band comprises an oscillator (231) with the frequency $F_c$ of the spectrum of the transducer which corresponds to the maximum power which can be supplied by this transducer, a multiplier (232) whose inputs receive the output signal of the circuit for the correction of the diffraction effects and the output signal of the oscillator, respectively, and a low-pass filter (240) which receives the output signal of the multiplier and which is connected to the input of the logarithmic amplifier.

3. A device as claimed in Claim 1, characterized in that the circuit (230) for frequency transposition and for selecting the frequency band comprises an oscillator (231) with a frequency $F_c$ of the spectrum of the transducer which corresponds to a power which is lower than the maximum power which can be delivered by this transducer, a multiplier (232) whose inputs receive the output signal of the circuit for the correction of the diffraction effects and the output signal of the oscillator, respectively, and a low-pass filter (240) which receives the output signal of the multiplier and which is connected to the input of the logarithmic amplifier.

4. A device as claimed in Claim 1, characterized in that the circuit (230) for frequency transposition and for selecting the frequency band comprises a band-pass filter having a central frequency $F_c$ which is equal to the frequency of the spectrum of the transducer (10) which corresponds to the maximum power which can be delivered by this transducer.

5. A device as claimed in Claim 1, characterized in that the circuit (230) for frequency transposition and for selecting the frequency band comprises a band-pass filter having a central frequency $F_c$ which is equal to a frequency of the spectrum of the transducer (10) which corresponds to a power which is lower than the maximum power which can be delivered by this transducer.

6. A device as claimed in any one of the Claims 2 through 5, characterized in that the circuit (210) for automatic gain control comprises means for producing a time window during which the variation of the gain is suspended.

7. A device as claimed in any one of the Claims 2 through 5, characterized in that the circuit (210) for automatic gain control comprises a variable-gain amplifier (211) which is controlled by a gain control circuit (212), the device comprising a subtraction circuit (214) which is connected between the logarithmic amplifier and the $F_c$-divider (260) and whose positive input receives the output signal of the logarithmic amplifier, its negative input receiving the output signal of a second logarithmic amplifier whose input is connected to the output of the gain control circuit (212).

8. A device as claimed in any one of the Claims 2 through 5, characterized in that two identical, parallel-connected channels are connected to the output of the circuit (210) for automatic gain control, each channel comprising a circuit (311) and (321) for the correction of the diffraction effects, a circuit (312) and (322) for the selection of a narrow frequency band centered around a distinct frequency $F_{c_1}$, $F_{c_2}$, respectively, within the pass-band of the transducer (10), and also comprising a logarithmic amplifier (314) and (324) whose outputs are connected to a positive input of a subtraction circuit (214) and to the negative input of this subtraction circuit, respectively, between the output of the subtraction circuit and the input of the channel $Y_2$ of the display device there being connected a divider (260) which is adapted to divide by $F_{c_1}-F_{c_2}$.

**Patentansprüche**

1. Gerät zum Untersuchen von Medien und insbesondere von biologischen Geweben durch Ultraschallechographie, mit wenigstens einem Ultraschallwandler (10) der einer Emissionsstufe (50) zur Gewährleistung einer wiederholten Emission von Ultraschallsignalen, und einer Empfangsstufe (100, 200) zur Gewährleistung des Empfangs der Ultraschallechos entsprechend grösseren Hindernissen in der Fortpflanzungsrichtung der ausgesandten Signale zugeordnet ist, wobei die Empfangsstufe eine erste Schaltung (100) für die Verarbeitung der empfangenen Echos enthält, die selbst einen ersten an die Ausgangselektrode des Wandlers angeschlossenen Verstärker (101), eine Verstärkungsausgleichsanordnung (102) und eine Anzeigeanordnung (103) für die zeitabhängige Anzeige der Positionen der Echos entlang der Untersuchungsrichtung und ihrer Amplituden enthält, dadurch gekennzeichnet, dass die Empfangsstufe in Parallelschaltung mit der ersten Verarbeitungsschaltung (100) eine zweite Verarbeitungsschaltung (200) enthält, die aus einer Reihenschaltung einer echoabstandsabhängigen automatischen Verstärkungsregelschaltung (210), einer Beugungskorrekturschaltung (220), einer Schaltung (230) zum Transponieren der Frequenz und zum Auswählen eines schmalen um eine Frequenz $F_c$ zentrierten Frequenzbandes das im Durchlassband des Wandlers (10) enthalten ist, einen logarithmischen Verstärker (250) und einem $F_c$-Teiler (260) besteht, dessen Ausgangssignal an die Anzeigeanordnung (103) zum Anzeigen der verschiedenen Werte des Ultraschallabschwächungskoeffizienten zwischen den Hindernissen gelangt.

2. Gerät nach Anspruch 1, dadurch gekennzeichnet, dass die frequenztransponierende Frequenzbandauswahlschaltung (230) einen auf der Frequenz $F_c$ des Wandlerspektrums die der maximalen Leistung des Wandlers entspricht schwingenden Oszillator (231), eine an ihren Eingängen das Ausgangssignal der Beugungskorrekturschaltung und das Oszillatorausgangssignal empfangende Multiplizierschaltung (232) und ein das Ausgangssignal der Multiplizierschaltung empfangendes und mit dem Eingang des logarithmischen Verstärkers verbundenes Tiefpassfilter (240) enthält.

3. Gerät nach Anspruch 1, dadurch gekennzeichnet, dass die frequenztransponierende Frequenzbandauswahlschaltung (230) einen auf der Frequenz $F_c$ des Wandlerspektrums, die einer niedrigeren Leistung als der vom Wandler lieferbaren maximalen Leistung entspricht, schwingenden Oszillator (231) eine an ihren Eingängen das Ausgangssignal der Beugungskorrekturschaltung und das Ausgangssignal des Oszillators empfangende Multiplizierschaltung (232), und ein das Ausgangssignal der Multiplizierschaltung empfangendes und mit dem Eingang des logarithmischen Verstärkers verbundenes Tiefpassfilter (240) enthält.

4. Gerät nach Anspruch 1, dadurch gekennzeichnet, dass die frequenztransponierende Frequenzbandauswahlschaltung (230) ein Banddurchpassfilter mit der zentralen Frequenz $F_c$ gleich der Frequenz des Spektrums des Wandlers (10) enthält, die der von ihm lieferbaren maximalen Leistung entspricht.

5. Gerät nach Anspruch 1, dadurch gekennzeichnet, dass die frequenztransponierende Frequenzbandauswahlschaltung (230) ein Banddurchpassfilter mit einer zentralen Frequenz $F_c$ gleich einer Frequenz des Spektrums des Wandlers (10) enthält, die einer niedrigeren Leistung als der maximalen vom Wandler lieferbaren Leistung entspricht.

6. Gerät nach einem der Ansprüche 2 bis 5, dadurch gekennzeichnet, dass die automatische Verstärkungsregelschaltung (210) Mittel zum Erzeugen eines Zeitfensters enthält, wobei für die Dauer dieses Fensters die Verstärkungsänderung aufgehoben wird.

7. Gerät nach einem der Ansprüche 2 bis 5, dadurch gekennzeichnet, dass die automatische Verstärkungsregelschaltung (210) einen Verstärker (211) mit variabler Verstärkung enthält, der durch eine Verstärkungssteuerschaltung (212) gesteuert wird, und dass das Gerät zwischen dem logarithmischen Verstärker und dem $F_c$-Teiler (260) eine Subtrahierstufe (214) enthält, die an ihren positiven Eingang das Ausgangssignal des logarithmischen Verstärkers und an seinem negativen Eingang das Ausgangssignal eines zweiten logarithmischen Verstärkers empfängt, dessen Eingang mit dem Ausgang der Verstärkungssteuerschaltung (212) verbunden ist.

8. Gerät nach einem der Ansprüche 1 bis 5, dadurch gekennzeichnet, dass dieses Gerät am Ausgang der automatischen Verstärkungsregelschaltung (210) zwei identische und parallelgeschaltete Wege, die je eine Beugungskorrekturschaltung (311) und (321) eine Auswahlschaltung (312 und 322) eines schmalen, auf je eine getrennte Frequenz $F_c$ und $Fc_2$ im Durchlassband des Wandlers (10) zentrierten Frequenzbandes, und einen logarithmischen Verstärker (314 bzw. 324) enthalten von denen einer mit seinem Ausgang an den positiven Eingang einer Subtrahierstufe (214) und der andere an den negativen Eingang dieser Subtrahierstufe angeschlossen ist, wobei der Teiler (260) zwischen dem Ausgang der Subtrahierstufe und dem Eingang des Weges ($Y_2$) der Anzeigeanordnung ein $Fc_1$–$Fc_2$-Teiler ist.

FIG.1

FIG.2

FIG.3